# EUROPEAN PATENT SPECIFICATION

(11) **EP 0 326 019 B1**
(45) Date of publication and mention of the grant of the patent: **11.08.1993**
(21) Application number: 89100867.4
(22) Date of filing: 19.01.1989
(51) Int. Cl.: C01B 33/20, C09C 1/02

(54) **Method for producing fluorine mica**
Verfahren zur Herstellung von Fluorglimmer
Procédé de préparation de mica fluoré

(30) Priority: 21.01.1988 JP 12345/88; 02.08.1988 JP 193796/88
(43) Date of publication of application: 02.08.1989
(73) Proprietor: CO-OP CHEMICAL CO., LTD, Tokyo (JP); The Agency of Industrial Science and Technology, Chiyoda-ku Tokyo-to (JP)
(72) Inventor: Tateyama, Hiroshi c/o Government Industrial, Shuku-machi Tosu-shi Saga-ken (JP); Tsunematsu, Kinue c/o Government Industrial, Shuku-machi Tosu-shi Saga-ken (JP); Kimura, Kunio c/o Government Industrial, Shuku-machi Tosu-shi Saga-ken (JP); Hirosue, Hideharu c/o Government Industrial, Shuku-machi Tosu-shi Saga-ken (JP); Jinnai, Kazuhiko c/o Government Industrial, Shuku-machi Tosu-shi Saga-ken (JP); Furusawa, Takashi, Minami-Kanbara-gun Niigata-ken (JP)
(74) Representative: Hansen, Bernd, Dr. Dipl.-Chem.

(56) References cited:
- GB-A- 1 573 925
- PATENT ABSTRACTS OF JAPAN Vol 6, No 165 (C121)(1043) August 28 1982 && JP-A-5782114 (Kogyo Gijutsuin) 22.5.1982
- PATENT ABSTRACTS OF JAPAN vol 11, no 30 (C400)(2477) January 20 1987 && JP-A-61201616 (Agency of Ind. Science & Technology) 6.9.1986

## Description

### BAKGROUND OF THE INVENTION

This invention relates to a method for producing swellable fluorine mica having the property of being swelled by incorporating readily moisture in the air into its interlayer site of crystals at room temperature or non-swellable mica.

This kind of florine mica has been prepared in the prior art according to the so-called melting method in which silica, magnesia, alumina and a fluoride is used as the starting material, melted at a high temperature of 1,300 °C or higher and cooled gradually, or according to the so-called solid reaction method in which a mixture of feldspar, olivine, quartz and a fluoride is subjected to the reaction at 1,000 °C or higher for 2 to 24 hours. However, such methods of the prior art had the drawbacks that the reaction temperature was too high, that the reaction time was too long, etc.

Accordingly, in Japanese Patent Publication No. 1215/1984, there has been known method in which fluorine mica represented by MF·3MgO·4SiO₂ (wherein M represents K, Na or Li) is produced by adding 15 to 25% by weight of an alkali fluoride powder to talc and heating the mixture at 800 to 1,200 °C. However, for making the reaction time within one hour, the temperature must be still maintained at a high temperature of 1,000 °C or higher, and in practical aspect, it has been desired to lower further the reaction temperature and shorten the maintenance time.

Further, in Japanese Unexamined Patent Publication No. 201616/1986, there is disclosed a method for producing swellable mica represented by 2LiF·3MgO·4SiO₂ by adding 15% by weight of LiF to talc and heating the mixture at 650 to 780 °C. However, it has been demanded to have a method for obtaining a product substantially comparable in quality with swellable mica obtained by use of LiF as the starting material without using expensive LiF or using it in an amount suppressed as small as possible.

### SUMMARY OF THE INVENTION

An object of the rpesent invention is to solve such task.

The present invention is a method for producing fluorine mica represented by the formula:

αMF·β(aMgF₂·bMgO)·γSiO₂

(wherein M represents sodium, lithium or potassium atom, α, β, γ, a and b each represent a coefficient, satisfying the relation of 0.1 ≦ α ≦ 2, 2 ≦ β ≦ 3, 3 ≦ γ ≦ 4 and a + b = 1, preferably 0 < a < 0.2), which comprises subjecting a fine powdery mixture comprising 10 to 35% by weight of an alkali silicofluoride represented by the formula:

M₂SiF₆

(wherein M is the same as defined above), optionally together with an alkali fluoride, and a balance of talc to heating treatment.

### BRIEF DESCRIPTION OF THE DRAWINGS

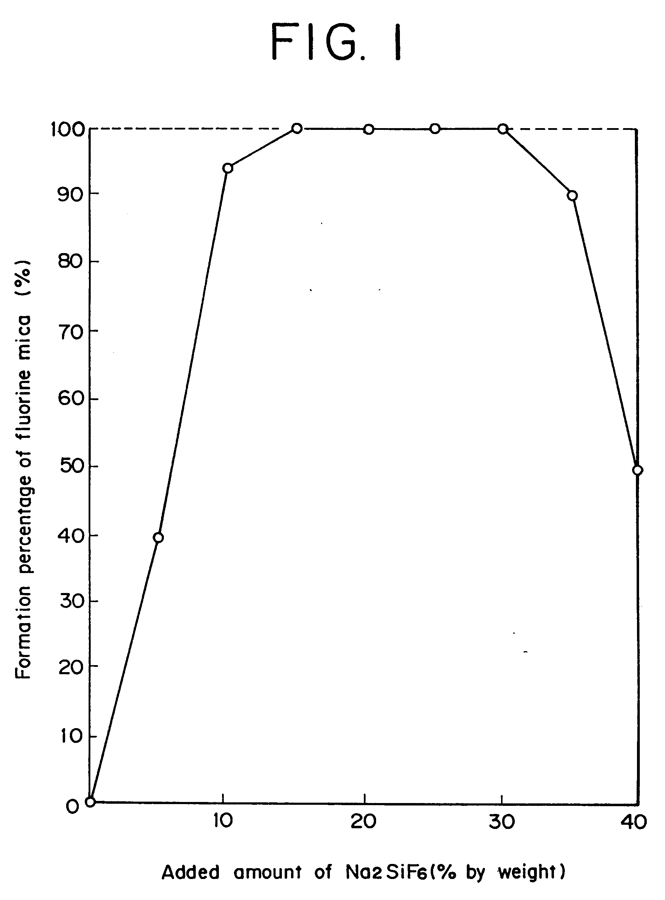

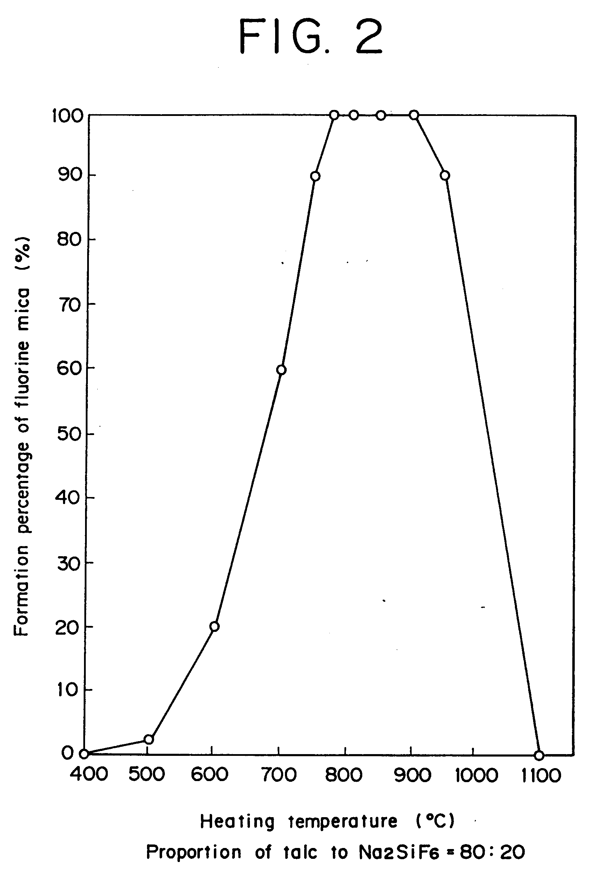

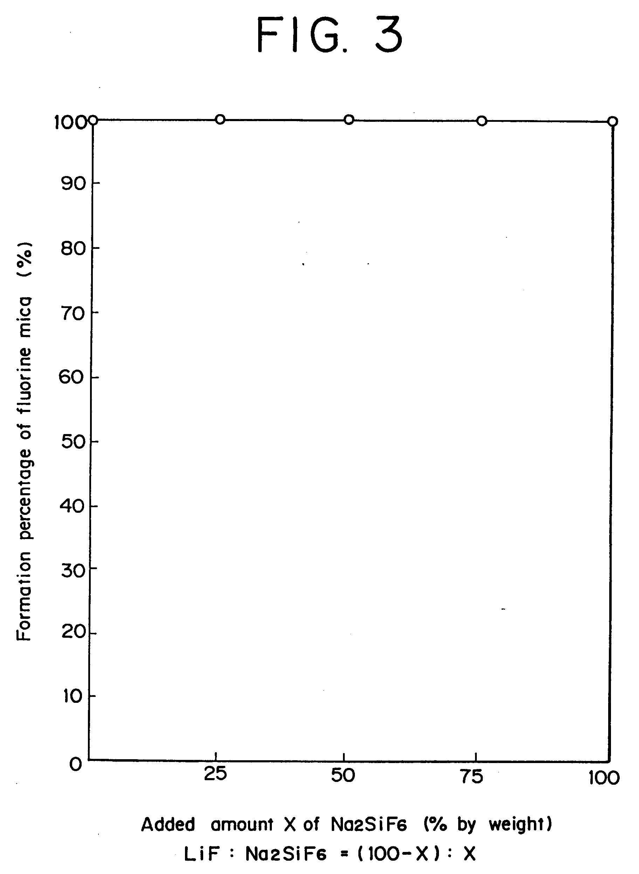

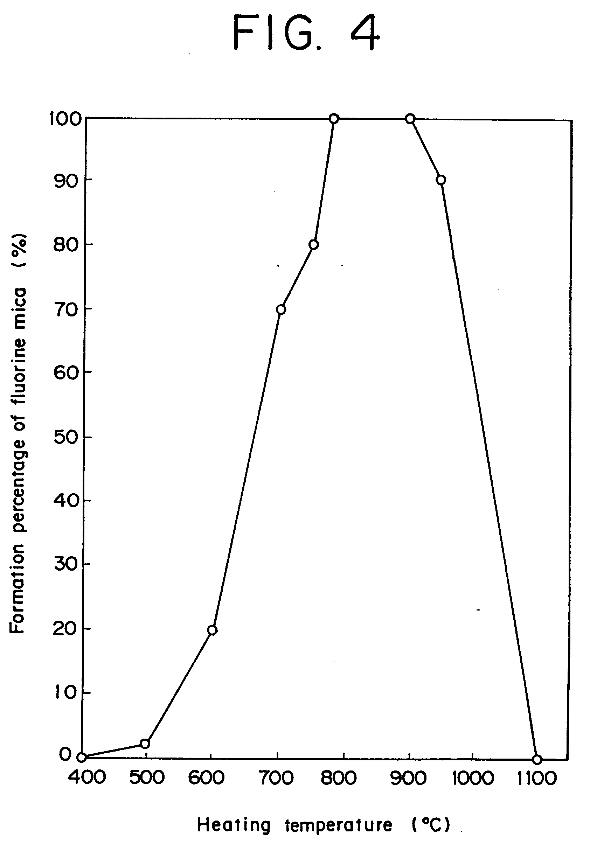

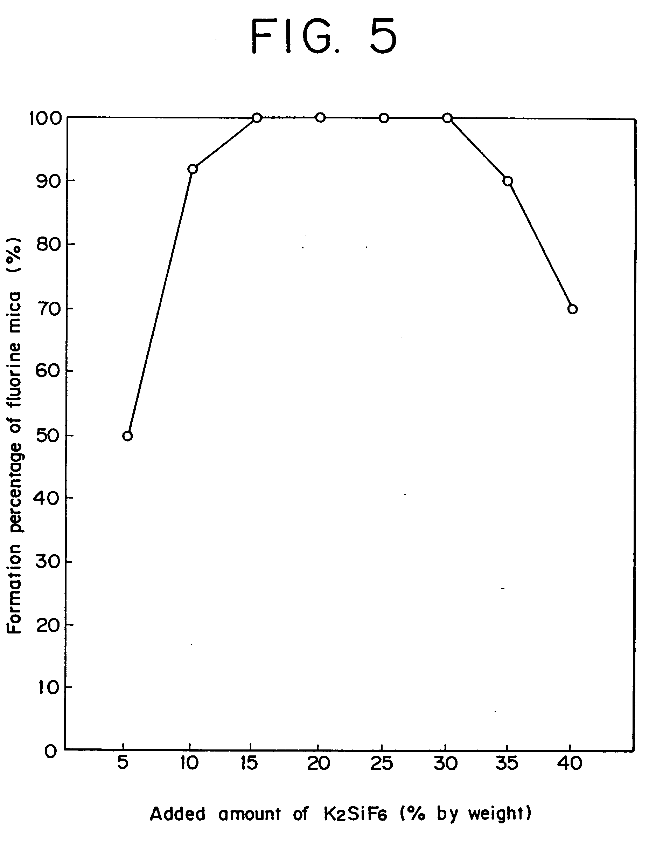

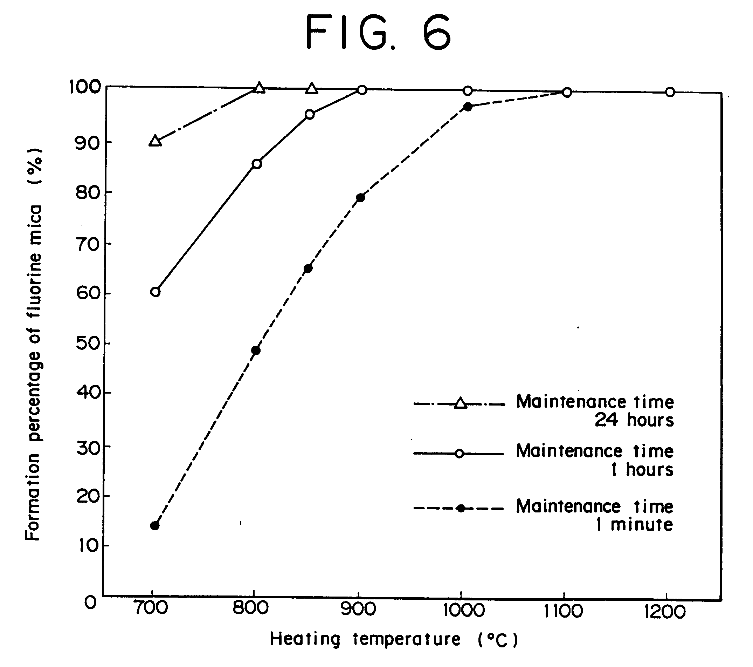

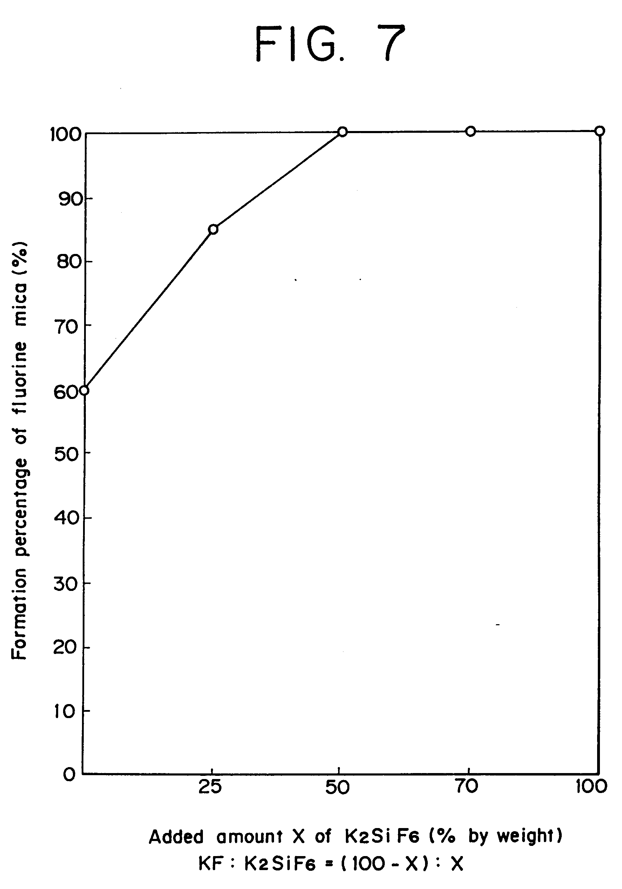

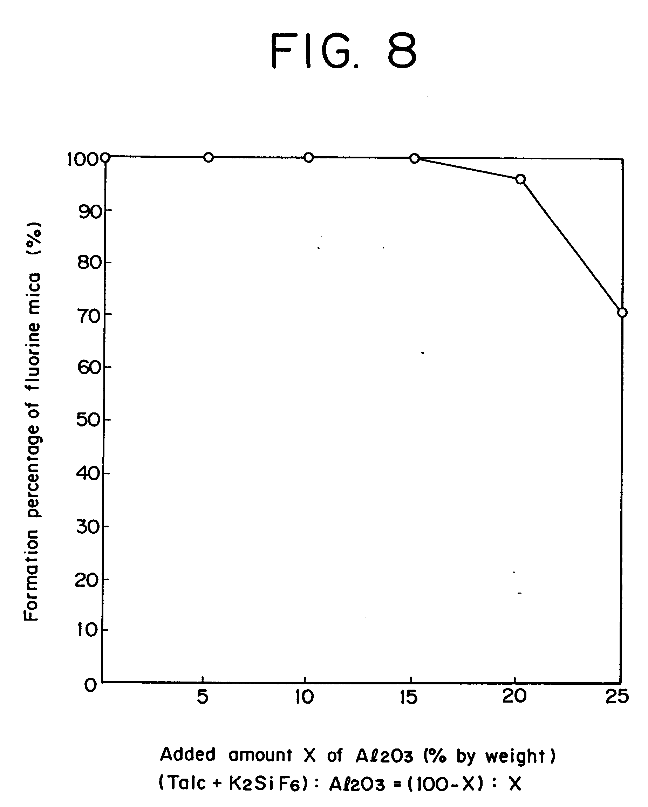

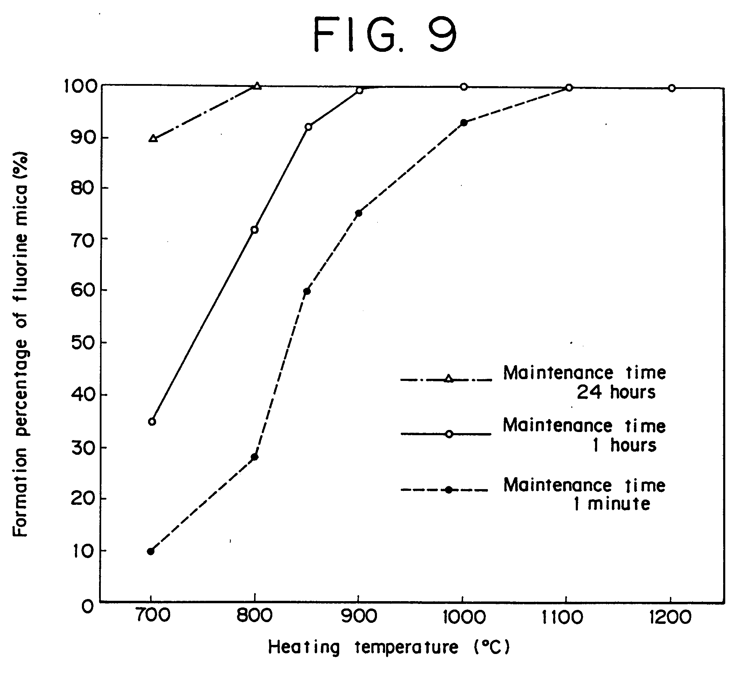

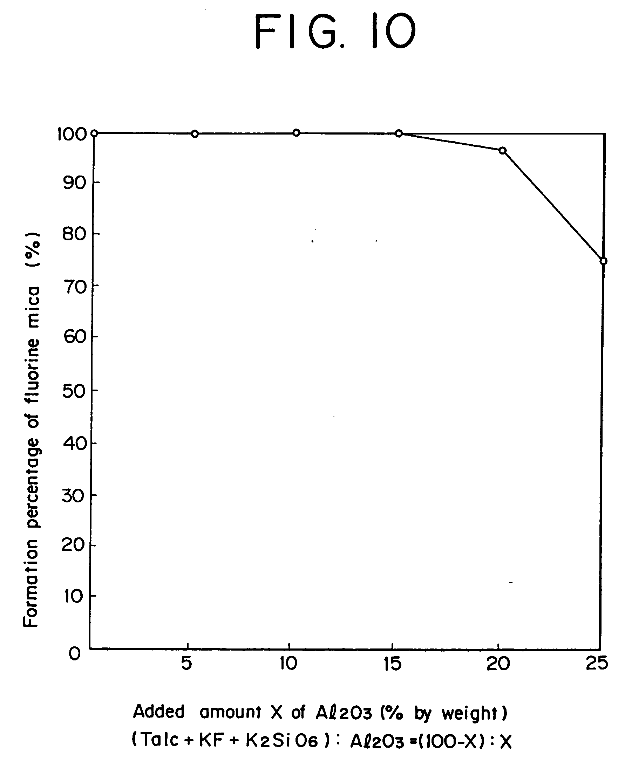

Fig. 1 is a graph showing the percentage of fluorine mica formed when the level of Na₂SiF₆ was varied; Fig. 2, a graph of the formation percentage when the heating temperature of talc + Na₂SiF₆ was varied; Fig. 3, a graph of the formation percentage when the formulated ratio of Na₂SiF₆ in Na₂SiF₆ + LiF was varied; Fig. 4, a graph of the formation percentage when the heating temperature of talc + Na₂SiF₆ + LiF was varied; Fig. 5, a graph of the formation percentage when the level of K₂SiF₆ added was varied; Fig. 6, a graph of the formation percentage when the heating temperature of talc + K₂SiF₆ was varied; Fig. 7, a graph of the formation percentage when the formulated ratio of K₂SiF₆ in KF + K₂SiF₆ was varied; Fig. 8, a graph of the formulation percentage when the amount of Al₂O₃ added in talc + K₂SiF₆ + Al₂O₃ was varied; Fig. 9 is a graph of the formulation percentage when the heating temperature of talc + K₂SiF₆ + KF + Al₂O₃ was varied; and Fig. 10, a graph showing the formation percentage when the amount of Al₂O₃ added in talc + K₂SiF₆ + KF + Al₂O₃ was varied.

### DETAILED DESCRIPTION OF THE INVENTION

When Na₂SiF₆ or Li₂SiF₆ is used as the starting material, a swellable fluorine mica represented by αNaF·(or LiF)·β(aMgF₂·bMgO)·γSiO₂ can be easily obtained. In the following, fluorine mica by use of desirable Na₂SiF₆ as the starting material is explained, but a similar product can be also obtained when Li₂SiF₆ is used as the starting material.

When the amount of Na₂SiF₆ added is less than 10% by weight or when on the contrary it exceeds 35% by weight, the percentage of fluorine mica formed is lowered as can be seen in Example 1 shown below and Fig. 1, and therefore the amount of Na₂SiF₆ is required to be 10 to 35% by weight, preferably 15 to 30 % by weight. The heating temperature during calcination is required to be 700 °C at the lowest, as can be apparently seen from Example 2 shown below and Fig. 2, while if the temperature exceeds 900 °C, the yield begings to be slightly lowered, and at higher temperature, the product will be sintered to give rise to such inconvenience of cumbersomeness accompanied as requiring subsequent crushing step, etc. Thus, the heating temperature may be made preferably 700 to 900 °C. The heating temperature also affects greatly swellability, and as the result of measurement of, for example, the fluorine mica produced at 700 to 750°C by the X-ray powder method, the peak at 9.1 Å (angstrom) also remained separately from the peak at 16.1 Å of the thickness in the direction of C-axis, but it was confirmed that the peak at 9.1 Å substantially disappeared in the fluorine mica produced at 780 °C to 900 °C to be shifted to 16.1 Å. The particle sizes of both talc and Na₂SiF₆ can be selected in view of the desirable particle size of the product, but generally desired to be fine, with an average size being preferably about 2 µm or less.

In the present invention, it is also possible to use a powdery mixture of Na₂SiF₆ and LiF by replacing a part of Na₂SiF₆ with LiF, and in this case the objective product can be obtained at the formation percentage of 100 % even if the additional amount of Na₂SiF₆ is varied as shown in Example 3 and Fig. 3. It, therefore, follows that LiF can be replaced with Na₂SiF₆. The powdery mixture of Na₂SiF₆ and LiF may be used in an amount of 10 to 35% by weight similarly as in the case of using the above Na₂SiF₆ along, and calcined at 700 to 900 °C to obtain a swellable fluorine mica represented by α·(cLiF·dNaF)·β(aMgF₂·bMgO)·γSiO₂ (wherein α, β, γ, a and b each represent a coefficient as defined above, and c and d each represent a coefficient satisfying the relation of c + d = 1) (see Example 4 and Fig. 4).

On the other hand, when K₂SiF₆ is used as the starting material, a nonswellable fluorine mica is represented by αKF·β(aMgF₂·bMgO)·γSiO₂ is easily obtained. When the amount of K₂SiF₆ is less than 10% by weight, and when on the contrary it is over 35% by weight, the formation percentage of fluorine mica is lowered as seen in Example 5 shown below and Fig. 5, and therefore the amount of K₂SiF₆ added should be 10 to 35% by weight, preferably 15 to 30% by weight, similarly as in the case of swellable fluorine mica. The heating temperature during calcination, as is apparent from Example 6 shown below and Fig. 6, may be preferably 700 °C or higher, and the formation percentage will be lower when the temperature is lower or the maintenance time is shorter. Preferably, heating temperature is 900 °C or higher and the heating time is one hour or more. However, at a temperature higher than 1,200 °C, the product will be sintered, whereby such inconvenience of cumbersomeness is accompanied as requiring subsequent crushing step. Therefore, the heating temperature is preferably made 700 to 1,200 °C.

The particle sizes of both talc and K₂SiF₆ may be desirably selected in view of the desirable particle size of the product formed, but generally desired to be fine, with an average particle size being preferably about 2 µm or less.

In the present invention, it is also possible to use a powdery mixture of K₂SiF₆ and KF by replacing a part of K₂SiF₆ with KF, and the ratio of K₂SiF₆ in the total amount of the both is required to be 25% by weight or more of K₂SiF₆ as shown in Example 7 and Fig. 7. The powdery mixture of K₂SiF₆ and KF can be used in an amount of 10 to 35% by weight, preferably 15 to 30% by weight, with the balance being talc powder, similarly as in the above case of using K₂SiF₆ alone, and calcined similarly at 700 to 1,200 °C to obtain a non-swellable fluorine mica represented by αKF·β(aMgF₂·bMgO)·γSiO₂ (wherein α, β, γ, a and b each represent a coefficient as defined above).

Further, in the present invention Al₂O₃ can be added in an amount of 25% by weight of the total amount, preferably 10 to 20% by weight, to control the properties of the fluorine mica formed, such as swellability and tone. The fluorine mica thus formed can be represented by αMF·β(aMgF₂·bMgO)·δAl₂O₃·γSiO₂ (wherin M is the same as defined above, α, β, γ, a and b each represent a coefficient as defined above, and δ represents a coefficient satisfying the relation of 0 ≦ δ ≦ 1).

A product approximate to naturally occurring phlogopite can be obtained when prepared with addition of Al₂O₃ to K₂SiF₆. As shown in Example 8 and Fig. 8, when Al₂O₃ is added to K₂SiF₆, the formation percentage will not be lowered if the ratio of Al₂O₃ added in 25% by weight or lower, preferably 10 to 20% by weight. The calcination temperature in this case is 700 to 1,200 °C as is apparent from Example 8 and Fig. 9, similarly as in the case of using K₂SiF₆ alone. The preparation method of adding Al₂O₃ and its proportional ratio is applicable also when using a powdery mixture of Na₂SiF₆ of K₂SiF₆ and KF as the starting material (Example 9 and Fig. 10).

According to the preparation method of the present invention, in obtaining swellable mica, all or a part of expensive LiF can be replaced with relatively inexpensive and readily available Na₂SiF₆ or Li₂SiF₆, and yet the heating temperature is not required to be so high as 700 °C to 900 °C, and also the heating time may be sufficiently one hour, whereby the productivity can be high.

The non-swellable mica obtained by the method of the present invention, which uses K₂SiF₆ as a starting material and heats at 700 to 1,200 °C, has shapes of hexagonal plates with regular particle sizes, and therefore can be made very thin, and further the whiteness degree is 90 or higher, which is very white as compared with the whiteness degree of about 75.9 of natural mica, and therefore it can be utilized widely as pigment.

### Example 1

Talc milled in a ball mill to an average particle size of 2 µm was mixed with Na₂SiF₆ with its average particle size being the same as 2 µm at various levels of addition within the range of 40% by weight based on the total amount, and each mixture was placed in a magnetic crucible and maintained in an electric furnace at 800 °C for one hour. The percentage of the fluorine mica produced is shown in Fig. 1. The percentage of the fluorine mica formed is measured by use of the X-ray powder diffraction method and represented in terms of the value obtained by dividing the area of the diffraction peak (2ϑ = 10.0 to 5.5°) of the fluorine mica formed by the area of the peak of mica formed in 100%. The same method was used in the following Examples. The percentage of the fluorine mica formed is represented by "formation percentage" hereinafter.

From Fig. 1, it can be seen that the percentage of the swellable mica formed is lower in the case when the amount of Na₂SiF₆ added is smaller than 10% by weight and in the case, when on the contrary it exceeds 35% by weight.

### Example 2

By use of talc and Na₂SiF₆ with average particle size of 2 µm, a mixture consisting of 20% by weight of Na₂SiF₆ and the balance of talc was placed in a magnetic crucible, and the heating temperature in the electric furnace was varied (the maintainance time was 1 hour in all the cases). The percentages of fluorine mica produced in this case are shown in Fig. 2.

From Fig. 2, it can be seen that the heating temperature is preferably within the range of from 700 to 900 °C, and the percentage formed becomes lower outside of this range.

In this experiment, at a heating temperature of 700 to 750 °C, the peak of 9.1 Å also remained separately from the peak 16.1 Å, but it was confirmed that the peak of 9.1 Å substantially disappeared to be shifted to 16.1 Å between 780 and 900 °C.

### Example 3

By use of talc milled in a ball mill to an average particle size of 2 µm and Na₂SiF₆ and LiF having similarly the average particle sizes of 2 µm, powdery mixtures were prepared by varying the level of Na₂SiF₂ in the total amount of the both, with the total amount of the both being constantly 20% by weight. Each powdery mixture was placed in a magnetic crucible, maintained at 780 °C for one hour in an electric furnace to produce fluorine mica. The results are shown in Fig. 3. It can be seen that the formation percentage was maintained at 100 % in the total amount of Na₂SiF₆ + LiF.

### Example 4

A powdery mixture with a composition of 80% by weight of talc, 10% by weight of Na₂SiF₆ and 10% by weight of LiF which is considered to be the optimum mixed composition as the result of the above Example 3 was placed in a magnetic crucible, and the heating temperature in the electric furnace was varied (the maintenance time was one hour in all the cases) to determine the percentage of fluorine mica formed. The results are shown in Table 4.

From Fig. 4, it can be seen that the heating temperature is preferably within the range of from 700 to 900 °C, and the percentage formed becomes lower outside of this range. In this case, at a heating temperature of 700 to 750 °C, the peak of 9.1 Å also remained separately from the peak 16.1 Å, but it was confirmed that the peak of 9.1 Å substantially disappeared to be shifted to 16.1 Å between 780 and 900 °C.

### Example 5

Talc milled in a ball mill to an average particle size of 2 µm was mixed with K₂SiF₆ with its average particle size being similarly 2 µm at various levels of addition within the range of 40% by weight based on the total amount, and each mixture was placed in a magnetic crucible and maintained in an electric furnace at 900 °C for one hour. The percentage of the fluorine mica produced is shown in Fig. 5.

It can be seen that the percentage of the mica formed is lower in the case when the amount of K₂SiF₆ added is smaller than 10% by weight and in the case, when on the contrary it exceeds 35% by weight.

### Example 6

By use of talc and K₂SiF₆ with average particle sizes of 2 µm, a mixture with a composition of 20% by weight of K₂SiF₆ and the balance of talc and placed in a magnetic crucible, and the heating temperature in the electric furnace and the maintenance time were varied. The percentages of fluorine mica formed in this case are shown in Fig. 6.

From Fig. 6, it can be seen that the heating temperature is required to be 700 °C at the lowest, more preferably 800 °C or higher. At 1,000 °C or higher, fluorine mica can be obtained under high ratio within a very short time, but if the temperature is too high, the product may be sintered to involve cumbersomeness such as requiring subsequent crushing step, etc. Thus, the upper limit of the heating temperature should be made about 1,200 °C.

### Example 7

By use of talc milled in a ball mill to an average particle size of 2 µm and K₂SiF₆ and KF having similarly the average particle sizes of 2 µm, powdery mixtures were prepared by varying the level of K₂SiO₂ in the total amount of the both, with the total amount of the both being constantly 20% by weight. Each powdery mixture was placed in a magnetic crucible, maintained at 900 °C for one hour in an electric furnace to produce fluorine mica. The results are shown in Fig. 7.

From the results, it can be seen that the percentage of product is lowered when the ratio of K₂SiF₆ added is 25% by weight or less.

### Example 8

By using further Al₂O₃ with an average particle size of 2 µm in addition to the same talc and K₂SiF₆ used in the above Example 5, the amount of Al₂O₃ added was varied within the range of 25% by weight of the total amount, with the proportion of talc:K₂SiF₆ being constantly equal to 80:20, and each composition was maintained at 900 °C for one hour to determine the percentage of fluorine mica formed. The results are shown in Fig. 8, from which it was confirmed that the amount of Al₂O₃ added, if it is in the range of 25% by weight or less, preferably 10 to 20% by weight, will not lower the formation percentage to give a product with a composition approximate to naturally occurring phlogopite.

Next, the graph shown in Fig. 9 obtained by varing the heating temperature and the maintenance time for the mixture with a composition of talc:K₂SiF₆:Al₂O₃=70:20:10. This results reveals that the heating temperature is required to be 700 °C at the lowest.

### Example 9

All of the starting powders of talc, K₂SiF₆, KF and Al₂O₃ used in this Example had average particle sizes of 2 µm, and the mixing ratio of talc:KF:K₂SiF₆ was made constantly 80:10:10, with the amount of Al₂O₃ added therein being varied within the range of 25% by weight of the total amount, and each composition was maintained at 900 °C for one hour similarly as in Example 8 to determine the percentage of fluorine mica formed. The results are shown in Table 10.

From Table 10, it can be also seen that the amount of Al₂O₃ added should preferably be in the range of 10 to 20% by weight of the total amount.

## Claims

1. A method for producing fluorine mica represented by the formula:
αMF·β(aMgF₂·bMgO)·γSiO₂
wherein M represents at least one selected from the group consisting of sodium, lithium and potassium atom, α, β, γ, a and b each represent a coefficient satisfying the relation of 0.1 ≦ α ≦ 2, 2 ≦ β ≦ 3, 3 ≦ γ ≦ 4 and a + b = 1, which comprises subjecting a fine powdery mixture comprising 10 to 35% by weight of an alkali silicofluoride represented by the formula:
M₂SiF₆
(wherein M is the same as defined above) and the balance of talc to heating treatment.

2. The method for producing fluorine mica according to claim 1, wherein the alkali silicofluoride is at least one of Na₂SiF₆ and Li₂SiF₆, the heating temperature is 700 to 900 °C and the product is represented by at least one of αNaF·β(aMgF₂·bMgO)·γSiO₂ and
αLiF·β(aMgF₂·bMgO)·γSiO₂ (where α, β, γ, a and b are the same as defined in Claim 1) and is swellable.

3. The method for producing fluorine mica according to claim 1, wherein the alkali silicofluoride is Na₂SiF₆.

4. The method for producing fluorine mica according to claim 3, wherein a fine powdery mixture consisting of 10 to 35% by weight of a mixture of Na₂SiF₆ and LiF and the balance of talc is ued as a starting material and the product is represented by the formula:
α(cLiF·dNaF)·β(aMgF₂·bMgO)·γSiO₂
(wherein α, β, γ, a and b are the same as defined in Claim 1, and c and d each represent a coefficient satisfying the relation of c + d = 1) and is swellable.

5. The method for producing fluorine mica according to claim 1, wherein K₂SiF₆ is used as the alkali silicofluoride, the heating temperature is 700 °C to 1,200 °C, and the product is represented by αKF·β(aMgF₂·bMgO)·γSiO₂ (wherein α, β, γ, a and b are the same as defined in Claim 1) and is non-swellable.

6. The method for producing fluorine mica according to claim 5, wherein a fine powdery mixture consisting of 10 to 35% by weight of a mixture of K₂SiF₆ and KF containing K₂SiF₆ at a ratio of 25% by weight or more and the balance of talc is used as a starting material, and the product is represented by the formula:
αKF·β(aMgF₂·bMgO)·γSiO₂
(wherein α, β, γ, a and b are the same as defined in Claim 1) and is non-swellable.

7. The method for providing fluorine mica according to claim 1, wherein a fine powdery mixture consisting of 10 to 35% by weight of a mixture of M₂SiF₆ (wherein M is the same as defined in Claim 1), 25% by weight or less of Al₂O₃ and the balance of talc is used as a starting material, and the product is represented by the formula:
αMF·β(aMgF₂·bMgO)·δAl₂O₃·γSiO₂
(wherein M is the same as defined in Claim 1, and α, β, γ, a and b are the same as defined in Claim 1, and δ represents a coefficient satisfying the relation of 0 ≦ δ ≦ 1) and is non-swellable.

8. The method for producing fluorine mica according to claim 7, wherein M₂SiF₆ is K₂SiF₆ and the product is non-swellable.

9. The method for producing fluorine mica according to claim 7, wherein a fine powdery mixture consisting of 10 to 35% by weight of a mixture of K₂SiF₆ and KF containing K₂SiF₆ at a ratio of 25% by weight or more 10 to 20% by weight of Al₂O₃ and the balance of talc is used as a starting material, and the product is represented by the formula:
αKF·β(aMgF₂·bMgO)·δAl₂O₃·γSiO₂
(wherein α, β, γ, a and b are the same as defined in Claim 1, and δ represents a coefficient satisfying the relation of 0 ≦ δ ≦ 1) and is non-swellable.

## Patentansprüche

1. Verfahren zum Herstellen von Fluorglimmer, welcher durch die Formel:
alphaMF · beta(aMgF₂ · bMgO) · gammaSiO₂
dargestellt ist, wobei M mindestens ein Element aus der Gruppe aus Natrium-, Lithium- und Kaliumatom bedeutet, alpha, beta, gamma, a und b jeweils einen Koeffizienten darstellen, der der Beziehung 0,1 ≦ alpha ≦ 2, 2 ≦ beta ≦ 3, 3 ≦ gamma ≦ 4 genügt und a + b = 1, umfassend Aussetzen einer feinen pulverigen Mischung, umfassend 10 bis 35 Gew.-% eines durch die Formel
M₂SiF₆
dargestellten Alkalisilicofluorids (wobei M wie zuvor angegeben definiert ist), und Rest Talk, einer Heizbehandlung.

2. Verfahren zum Herstellen von Fluorglimmer nach Anspruch 1, wobei das Alkalisilicofluorid mindestens eines aus Na₂SiF₆ und Li₂SiF₆ ist, die Heiztemperatur 700 bis 900°C beträgt, und das Produkt durch mindestens eines aus alphaNaF · beta(aMgF₂ · bMgO)· gammaSiO₂ und alphaLiF · beta(aMgF₂ · bMgO)· gammaSiO₂ (wobei alpha, beta, gamma, a und b wie in Anspruch 1 definiert sind ) dargestellt ist und schwellbar ist.

3. Verfahren zum Herstellen von Fluorglimmer nach Anspruch 1, wobei das Alkalisilicofluorid Na₂SiF₆ ist.

4. Verfahren zum Herstellen von Fluorglimmer nach Anspruch 3, wobei eine feine pulverige Mischung, bestehend aus 10 bis 35 Gew.-% einer Mischung aus Na₂SiF₆ und LiF und Rest Talk als Ausgangsmaterial verwendet wird, und das Produkt durch die Formel:
alpha(cLiF · dNaF) · beta(aMgF₂ · bMgO) · gammaSiO₂
dargestellt wird (wobei alpha, beta, gamma, a und b wie in Anspruch 1 definiert sind, und c und d jeweils einen Koeffizienten darstellen, der der Beziehung c + d = 1 genügt) und schwellbar ist.

5. Verfahren zum Herstellen von Fluorglimmer nach Anspruch 1, wobei K₂SiF₆ als Alkalisilicofluorid verwendet wird, die Heiztemperatur 700°C bis 1200°C beträgt, und das Produkt durch
alphaKF · beta(aMgF₂ · bMgO) · gammaSiO₂ (wobei alpha, beta, gamma, a und b wie in Anspruch 1 definiert sind) dargestellt ist und nicht schwellbar ist.

6. Verfahren zum Herstellen von Fluorglimmer nach Anspruch 5, wobei eine feine pulverige Mischung, bestehend aus 10 bis 35 Gew.-% einer Mischung aus K₂SiF₆ und KF, welche K₂SiF₆ in einem Anteil von 25 Gew.-% oder mehr enthält, und Rest Talk als Ausgangsmaterial verwendet wird, und das Produkt durch die Formel:
alphaKF · beta(aMgF₂ · bMgO) · gammaSiO₂
(wobei alpha, beta, gamma, a und b wie in Anspruch 1 definiert sind) dargestellt ist und nicht schwellbar ist.

7. Verfahren zum Herstellen von Fluorglimmer nach Anspruch 1, wobei eine feine pulverige Mischung, bestehend aus 10 bis 35 Gew.-% einer Mischung aus M₂SiF₆ (wobei M wie in Anspruch 1 definiert ist), 25 Gew.-% oder weniger Al₂O₃ und Rest Talk als Ausgangsmaterial verwendet wird, und das Produkt durch die Formel:
alphaMF · beta(aMgF₂ · bMgO) · deltaAl₂O₃ · gammaSiO₂
(wobei M wie in Anspruch 1 angegeben definiert ist, und alpha, beta, gamma, a und b wie in Anspruch 1 definiert sind, und delta einen Koeffizienten darstellt, der der Beziehung 0 delta 1 genügt) dargestellt ist und nicht schwellbar ist.

8. Verfahren zum Herstellen von Fluorglimmer nach Anspruch 7, wobei M₂SiF₆ K₂SiF₆ ist, und das Produkt nicht schwellbar ist.

9. Verfahren zum Herstellen von Fluorglimmer nach Anspruch 7, wobei eine feine pulverige Mischung, bestehend aus 10 bis 35 Gew.-% einer Mischung aus K₂SiF₆ und KF, welche K₂SiF₆ in einem Anteil von 25 Gew.-% oder mehr enthält, 10 bis 20 Gew.-% Al₂O₃ und Rest Talk als Ausgangsmaterial verwendet wird, und das Produkt durch die Formel:
alphaKF · beta(aMgF₂ · bMgO) · deltaAl₂O₃ · gammaSiO₂
(wobei alpha, beta, gamma, a und b wie in Anspruch 1 definiert sind, und delta einen Koeffizienten darstellt, der der Beziehung 0 ≦ delta ≦ 1 genügt) dargestellt ist und nicht schwellbar ist.

## Revendications

1. Procédé pour la production de mica fluoré représenté par la formule :
αMF·β(aMgF₂·bMgO)·γSiO₂
dans laquelle M représente au moins l'un des éléments choisis dans le groupe constitué par un atome de sodium, de lithium et de potassium, α, β, γ, a et b représentent chacun un coefficient gui satisfait à la relation 0,1 ≦ α ≦ 2, 2 ≦ β ≦ 3, 3 ≦ γ ≦ 4 et a + b = 1, dans lequel on soumet à un traitement thermique un mélange fin pulvérulent comprenant de 10 à 35% en poids d'un silicofluorure alcalin représenté par la formule :
M₂SiF₆
(dans laquelle M est tel que défini ci-dessus) et le complément de talc.

2. Procédé pour la production de mica fluoré selon la revendication 1, dans lequel le silicofluorure alcalin est au moins l'un parmi Na₂SiF₆ et Li₂SiF₆, la température de chauffage est de 700 à 900°c et le produit est représenté par au moins l'un parmi :
αNaF·β(aMgF₂·bMgO)·γSiO₂ et αLiF·β(aMgF₂·bMgO)·γSiO₂
(α, β, γ, a et b étant tels que définis dans la revendication 1) et est apte au gonflement

3. Procédé pour la production de mica fluoré selon la revendication 1, dans lequel le silicofluorure alcalin est Na₂SiF₆.

4. Procédé pour la production de mica fluoré selon la revendication 3, dans lequel un mélange pulvérulent fin constitué par 10 à 35% en poids d'un mélange de Na₂SiF₆ et de LiF et par le complément de talc est utilisé comme matériau de départ, et le produit est représenté par la formule :
α(cLiF·dNaF)·β(aMgF₂·bMgO)·γSiO₂
(dans laquelle α, β, γ, a et b sont tels que définis dans la revendication 1, et c et d représentent chacun un coefficient qui satisfait à la relation c + d = 1) et est apte au gonflement.

5. Procédé pour la production de mica fluoré selon la revendication 1, dans lequel K₂SiF₆ est utilisé comme silicofluorure alcalin, la température de chauffage est de 700°C à 1200°C et le produit est représenté par αKF·β(aMgF₂·bMgO)·γ SiO₂ (dans lequel α, β, γ, a et b sont tels que définis dans la revendication 1) et n'est pas apte au gonflement.

6. Procédé pour la production de mica fluoré selon la revendication 5, dans lequel un mélange pulvérulent fin constitué par 10 à 35% en poids d'un mélange de K₂SiF₆ et de KF contenant K₂SiF₆ à un taux de 25% en poids ou plus, et par le complément de talc est utilisé comme matériau de départ, et le produit est représenté par la formule :
αKF·β(aMgF₂·bMgO)·γSiO₂
(dans laquelle α, β, γ, a et b sont tels que définis dans la revendication 1) et n'est pas apte au gonflement.

7. Procédé pour la production de mica fluoré selon la revendication 1, dans lequel un mélange pulvérulent fin constitué par 10 à 35% en poids d'un mélange de M₂SiF₆ (dans lequel M est tel que défini dans la revendication 1), 25% en poids ou moins de Al₂O₃ et par le complément de talc est utilisé comme matériau de départ, et le produit est représenté par la formule :
αMF·β(aMgF₂·bMgO)·δAl₂O₃·γSiO₂
(dans laquelle M est tel que défini dans la revendication 1, et α, β, γ, a et b sont tels que définis dans la revendication 1, et δ représente un coefficient qui satisfait à la relation 0 ≦ δ ≦ 1), et n'est pas apte au gonflement.

8. Procédé pour la production de mica fluoré selon la revendication 7, dans lequel M₂SiF₆ est K₂SiF₆ et le produit n'est pas apte au gonflement.

9. Procédé pour la production de mica fluoré selon la revendication 7, dans lequel un mélange pulvérulent fin constitué par 10 à 35% en poids d'un mélange de K₂SiF₆ et de KF contenant K₂SiF₆ à un taux de 25% en poids ou plus, 10 à 20% en poids de Al₂O₃ et par le complément de talc est utilisé comme matériau de départ, et le produit est représenté par la formule :
αKF·β(aMgF₂·bMgO)·δAl₂O₃·γSiO₂
(dans laquelle α, β, γ, a et b sont tels que définis dans la revendication 1, et δ représente un coefficient qui satisfait à la relation 0 ≦ δ ≦ 1) et n'est pas apte au gonflement.
